# EUROPEAN PATENT APPLICATION

(11) **EP 3 220 319 A1**
(43) Date of publication of application: **20.09.2017**
(21) Application number: 16160424.4
(22) Date of filing: 15.03.2016
(51) Int. Cl.: G06Q 10/02, G06Q 10/04

(54) **METHODS AND SYSTEMS FOR REDUCING AIRCRAFT BOARDING TIMES**

(71) Applicant: Airbus Operations GmbH, 21129 Hamburg (DE)
(72) Inventor: Vollers, Lars, 21129 Hamburg (DE)
(74) Representative: Isarpatent

(57) **Abstract**

A method for determining individual passenger aircraft boarding times includes the steps of assigning a seat in an aircraft to a mobile device of a passenger of the aircraft, transmitting a timer start notification signal to the mobile device of the passenger, detecting the presence of the mobile device of the passenger at the assigned seat, and determining a boarding timespan as a period of time that elapsed between transmittal of the timer start notification signal and detection of the presence of the mobile device at the assigned seat.

## Description

### FIELD OF THE INVENTION

The present invention pertains to methods and systems directed to reducing aircraft boarding times, specifically by a method and a system for determining individual passenger aircraft boarding times and by a method for incentivizing passenger cooperation during boarding of an aircraft.

### TECHNICAL BACKGROUND

Aircraft standing on the ground at the gate instead of flying create economical disadvantages for the aircraft operator. Estimates for costs of standing aircraft range from 20 US$ per minute to over 250 US$ per minute. It goes without saying that such costs are highly undesirable for aircraft operators so that copious efforts are spent in order to reduce turn-around time (TRT) of aircraft on the ground. While not all factors associated with TRT may be influenced by the aircraft operator, some factors such as passenger boarding and/or de-boarding may be influenced through employing advantageous boarding strategies. Jaehn, F. and Neumann, S.: "Airplane boarding", European Journal of Operational Research, 2015, vol. 244, issue 2, pages 339-359 provides an overview over contemporary boarding strategies for passenger aircraft and the associated efficiencies of each of the strategies.

Several approaches in the prior art try to address passengers by influencing their boarding behaviour. For example, document WO 2009/149491 A1 discloses a floor plan for arranging a plurality of individuals into a desired order prior to boarding a passenger aircraft, with the floor plan having a plurality of separately identifiable markings thereon indicating an intended location for each individual on the floor plan, each of the separately identifiable markings corresponding to a respective seat on the aircraft. Document DE 10 2011 122 063 A1 discloses a computing unit for allocating boarding paths, available for boarding an aircraft, to passengers of the aircraft, the computing unit being configured to form two or more changeable seat groups from a plurality of seats provided in the aircraft and to allocate the boarding paths to the two or more seat groups formed. Document DE 100 52 594 A1 discloses display beacons in an aircraft cabin aiding passengers in identifying their allocated seat. Documents US 2006/0278764 A1 and CN 104 044 737 A disclose exemplary boarding strategies that involve pre-defining a boarding order in which passengers are to board an aircraft.

However, most of the approaches treat passengers as passive subjects with certain properties that obey predefined regularities which cannot be modified. Solutions that try to actively influence passengers in their behaviour are rare. For example, DeVries, P.: "Airline passenger information systems and process improvements", International Journal of Services and Standards, January 2009; vol. 5, issue 1, pages 42-50 suggests using mobile electronic devices of passengers to relay real-time boarding information to passengers individually, enabling the passengers to take more informed decisions during boarding. As another example, document US 2013/0268303 A1 suggests various means of communication and interaction with passengers during boarding in order to influence their boarding behaviour as desired.

### SUMMARY OF THE INVENTION

One of the objects of the invention thus is to find solutions for speeding up the boarding procedure of commercial passenger aircraft that are able to catalyse cooperative behaviour of passengers during boarding.

This and other objects are solved by a method for determining individual passenger aircraft boarding times having the features of claim 1, a system for determining individual passenger aircraft boarding times having the features of claim 8, and a method for incentivizing passenger cooperation during boarding of an aircraft having the features of claim 12.

According to a first aspect of the invention, a method for determining individual passenger aircraft boarding times includes the steps of assigning a seat in an aircraft to a mobile device of a passenger of the aircraft, transmitting a timer start notification signal to the mobile device of the passenger, detecting the presence of the mobile device of the passenger at the assigned seat, and determining a boarding timespan as a period of time that elapsed between transmittal of the timer start notification signal and detection of the presence of the mobile device at the assigned seat.

According to a second aspect of the invention, a system for determining individual passenger aircraft boarding times includes an aircraft server configured to detect the presence of a mobile device at one of a plurality of seats in the cabin of the aircraft, and an airline server which is configured to assign a seat in the aircraft to a mobile device of a passenger of the aircraft, transmit a timer start notification signal to the mobile device of the passenger, and determine a boarding timespan as a period of time that elapsed between transmittal of the timer start notification signal and detection of the presence of the mobile device at the assigned seat by the aircraft server.

According to a third aspect of the invention, a method for incentivizing passenger cooperation during boarding of an aircraft includes the steps of determining the aircraft boarding time of an individual passenger with a method according to the first aspect of the invention, comparing the determined aircraft boarding time for the individual passenger with an expected aircraft boarding time, and awarding the individual passenger with an incentive, if the determined aircraft boarding time is faster than the expected aircraft boarding time by a predetermined incentivation threshold.

One of the ideas of the present invention relies on a "gaming" approach to trigger passengers to cooperate in a desired behaviour during boarding. The design approach to apply gaming concepts to non-gaming scenarios in order to make such scenarios more engaging and entertaining for the participants is often referred to as "gamification". In gamified environments, participants compete directly against one or more individuals or participate individually in an interactive experience that rewards predefined performance or behaviour. Competitive gamified boarding procedures may advantageously serve airlines in reducing turn-around times of aircraft due to reduced boarding times, thereby positively impacting business results. On the other hand, gamified boarding procedures raise awareness in passengers for the intricate difficulties associated with boarding and incentivize passengers to learn and accomplish more skills in efficient boarding behaviour. By rewarding skillful boarding behaviour, satisfaction and loyalty among customers may in particular be raised to the airline's advantage as well.

Addressing individual passengers during boarding creates a direct link between the airline's need for a fast and efficient boarding procedure and the individual passengers' boarding experience. Ultimately, stimulating cooperation of passengers through positive reinforcement on a psychological level leverages synergies between the passengers' perceived or actual benefits with the airline's economic benefits. The economic benefit achievable through gamified boarding addresses the interests of all stakeholders: Passenger information may be utilized more effectively to improve customization of the airline products, passengers benefit from customized options to obtain discounts, additional services or simply a satisfying gaming experience, and aircraft manufacturers benefit from obtaining statistical data associated with individual boarding times, enabling the manufacturer to improving aircraft interior design with respect to more efficient boarding.

Advantageous variations and developments may be gathered from the dependent claims as well as from the description in conjunction with the drawings.

According to some embodiments, the method may further comprise transmitting a boarding pass to the mobile device of the passenger. Many airlines use boarding passes on personal mobile devices for passengers already, so the additional functionality as a boarding time tracker may be advantageously tied to the already present information of the boarding pass. Moreover, the passenger does not need to separately need to sign up for the additional functionality of boarding time tracking.

According to some further embodiments of the method, the timer start notification signal may be transmitted to the mobile device at a point in time that depends on the position of the assigned seat in a predetermined boarding order of the aircraft. In particular, the airline may apply any pre-set boarding strategy which takes into account a desired boarding order in which the passenger assigned to the respective seat would be called at the gate. Advantageously, the call for those passengers participating in the boarding time tracking may be specifically tailored towards the desired boarding strategy, therefore the timer start notification signal may serve as a customized boarding call for individual passengers.

According to some further embodiments of the method, detecting the presence of the mobile device at the assigned seat may comprise detecting the reception of a connection request of the mobile device at a seat communication device of the assigned seat. Alternatively or additionally, detecting the presence of the mobile device at the assigned seat may comprise detecting the position of the mobile device within a cabin of the aircraft via a wireless positioning system. Due to the widespread use of personal electronic devices of passengers, wired or wireless communication networks are already implemented in many aircraft. The existing communication networks may be advantageously used for localization of individual mobile devices within a cabin of the aircraft, so that the point in time at which a mobile device (and, hence, the passenger to which the mobile device belongs) reaches a predefined seat may be efficiently determined.

In some embodiments of the method, the seat communication devices may be Bluetooth® communication devices, NFC (Near-Field Communication) devices or IrMC (Infrared Mobile Communication) communications devices. Such devices gain wider use in aircraft due to the additional connectivity they provide to personal electronic devices in an aircraft network.

According to some further embodiments of the method, the method may further comprise determining a release timespan as a period of time during which the mobile device is detected in the vicinity of one of a number of predefined objects, and subtracting the release timespan from the boarding timespan to determine a passenger accredited boarding timespan. In some settings during itinerary of the passenger from the gate to his/her assigned seat, delays are unavoidable and their duration cannot be influenced by the passenger. In order to relieve the psychological pressure on the passenger in such settings, the boarding time tracking may advantageously be halted during those unavoidable delay situations. For example, transportation over the airfield from the gate to the aircraft in busses or similar vehicles cannot be abbreviated by the passenger himself/herself Thus, taxiway transportation may count as release timespan in favour of the passenger.

According to some embodiments, the system may further comprise a plurality of seat communication devices, each respectively installed at one of the plurality of seats in the cabin of the aircraft, the aircraft server being configured to detect the presence of a mobile device by detecting the reception of a communication request of the mobile device at the seat communication devices. In some embodiments, the seat communication devices may be Bluetooth® communication devices, NFC devices or IrMC communications devices.

According to some further embodiments, the airline server may further be configured to transmit a boarding pass to the mobile device of the passenger.

According to some embodiments of the incentivization method, the method may further comprise transmitting the result of the comparison of the determined aircraft boarding time with the expected aircraft boarding time to a mobile device of the individual passenger. The passenger may then advantageously get immediate feedback on his/her performance during boarding, thus reinforcing efficient boarding behaviour and enhancing customer satisfaction. The actual boarding times may be displayed in a list of previous boarding times ("highscore list") or the progress in improvements of boarding times may be shown. The passenger may also be shown comparable results of other passengers or of predefined persons associated with the passenger, for example via social network connections. Similar to activity trackers, much of the appeal that makes boarding time trackers effective tools in stimulation passenger cooperation lies in the gamification of the non-gaming activity of boarding on one hand and in the social dimension of sharing via social media and resulting rivalry on the other. Boarding time trackers - just like activity trackers - can serve as a means of identification with a community which in turn incites broader participation among the community. The mobile devices (and corresponding apps) used for boarding time tracking may present data in statistical form meant to be viewed after boarding has concluded. Additionally or alternatively, the mobile devices may display an online progress during the boarding procedure, either in statistical data form with numbers and diagrams, or in gamified interactive form, for example alike to "ghost cars". Ghosting is a feature sometimes used in time trial modes of racing car video games which enables the player to review performance in previous rounds by displaying a "ghost car" as translucent versions of the player's actual vehicle which may follow the last or fastest path a player took around the track. Similarly, the boarding time tracker may employ an app that displays a "ghost passenger" that virtually boards the aircraft in the time allotted in accordance with the predefined boarding strategy.

According to some embodiments of the incentivization method, the method may further comprise offering a choice of different incentives to the individual passenger on her/his mobile device, if the determined aircraft boarding time had been faster than the expected aircraft boarding time by the predetermined incentivation threshold. Such choices may in some embodiments include one or more of frequent traveller miles, pre-order of food choices on the next flight and discounts on ticket prices for the next flights. Such options may advantageously catch the passengers' interest and commitment to improve boarding behaviour. It may also be possible to provide group incentives for a group of passengers travelling together. For example, family members or business partners may be linked together in the boarding time tracking group, and the incentives may be awarded based on a mean value or a minimum value of the determined boarding times for the group members.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a system for determining aircraft boarding times according to an embodiment.
Fig. 2 schematically illustrates an exemplary message sequence chart according to which a system of Fig. 1 may be operated according to another embodiment.
Fig. 3 schematically illustrates a method for determining aircraft boarding times according to another embodiment.
Fig. 4 schematically illustrates a method for incentivizing passenger cooperation during boarding of an aircraft according to a further embodiment.

### DETAILED DESCRIPTION OF EMBODIMENTS OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

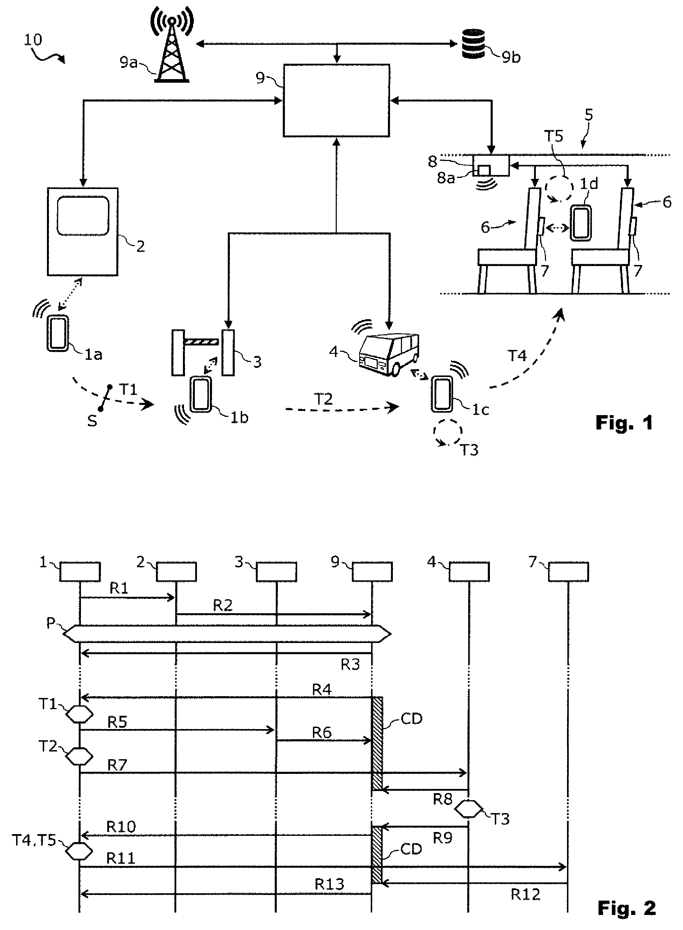

Fig. 1 schematically illustrates a system 10 for determining aircraft boarding times. The system 10 may be fully or at least partly under control of an aircraft operator, such as an airline or an aircraft manufacturer. The system 10 may in particular be designed for operation with a number of mobile devices of which four mobile devices 1a, 1b, 1c, 1d are exemplarily shown in Fig. 1 in various stages of a boarding procedure. The mobile devices 1 may in particular be personal electronic device (PED) belonging to different passengers. PEDs in the context of the present invention include all electronic means which can be used for the purpose of entertainment, communication and/or office work. For example, PEDs can include all types of consumer devices, such as laptops, mobile phones, smartphones, handheld devices, palmtop PCs, tablet PCs, GPS devices, navigation devices, audio equipment such as MP3 players, portable DVD/Bluray^{®} players, smartwatches, Google® glasses, digital cameras or any other similar electronic devices of any kind. The number of mobile devices 1 as being used in operation of the system 1 may in particular not be limited to four, but may be any number as desired and applicable in any given boarding situation.

The system 10 includes an airline server 9 as a central element. The airline server 9 may be connected to a plurality of different system components such as a check-in terminal 2, a gate terminal 3, a communication device of a transportation vehicle 4 and an aircraft server 8 in an aircraft cabin 5 of an aircraft. The communication between the airline server 9 and the various system components may be wired. Alternatively or additionally, the airline server 9 may be in wireless communication with the various system components, for example via a radio communication network schematically depicted with reference numeral 9a. In order to store passenger data, flight data, airline data and/or other vital passenger or airline related information, the airline server 9 may be connected to an airline data server schematically depicted with reference numeral 9b.

The airline server 9 may further be in communication with a number of mobile devices 1 belonging to passengers, for example via one of the various system components 2, 3, 4 and 8 to which the mobile devices 1 may be connected in their vicinity. For example, the mobile devices 1 may be used to establish a local network between a check-in terminal 2 and the mobile device, for example via a Bluetooth® connection, an NFC connection, a WiFi connection or other suitable means such as a connection via an app or a check-in website. The airline server 9 may further be in communication with the mobile devices 1 via the radio communication network 9 using a subscription based wireless or phone connection of a network provider.

In Fig. 1, several stages of a boarding procedure of a passenger and the concomitant movement of his/her respective mobile device 1 is depicted in various stages. Exemplarily, several mobile devices 1a, 1b, 1c, 1d are shown in those various stages. Moreover, the dashed arrows schematically indicate a travelling action of the passengers and their mobile devices on the way from the check-in to their seat 6 in the aircraft cabin 5 of the aircraft. Exemplarily reference is made to the message sequence chart of Fig. 2 in which a typical itinerary of the passenger is outline in conjunction with messages, requests and responses that may typically be exchanged between the participation entities of the system 10.

A passenger may check-in at a check-in terminal 2 at the aircraft using his/her mobile device 1. To that end, the mobile device 1 may send a check-in request R1 to the check-in terminal 2 which in turn relays the request for verification and confirmation to the airline server 9 in a message R2. The airline server 9 may look up the passenger data in the airline data server 9b and may initiate a verification and authentication scheme for retrieving and verifying credentials of the mobile device 1. Moreover, the airline server 9 may perform a participation query action to inquire whether the passenger would like to participate in the boarding time tracking procedure as described further below. If the passenger affirms confirmation, for example by explicitly consenting to the query action, by having installed a corresponding app or by having deposited confirmation data in his/her passenger profile on the airline data server 9b, the airline server 9 establishes a participation link between the mobile device 1 and the respective flight to be boarded.

The airline server 9 may in particular send a confirmation message R3 to the mobile device 1 and optionally transmit a boarding pass to the mobile device 1 of the passenger for boarding the aircraft. The passenger then proceeds towards the gate, while the airline server 9 checks in other passengers with other mobile devices, possibly enlisting them in the boarding time tracking for this flight as well. The airline server 9 may additionally determine a boarding strategy for the flight, depending for example on the type of aircraft, the type of apron for the aircraft, the number and locations of aircraft entrances, the number or aisles and seat rows, eventual boarding priorities for handicapped passengers, toddlers or otherwise prioritized passengers and similar parameters. Boarding strategies may be selected from a known number of different choices, such as the ones outlined in Jaehn, F. and Neumann, S.: "Airplane boarding", European Journal of Operational Research, 2015, vol. 244, issue 2, pages 339-359.

The airline server 9 may in particular assign one of the aircraft seats 6 to each of the passengers and their mobile devices 1, respectively. In other words, each of the mobile devices 1 is uniquely assigned to one of the seats 6 in the aircraft cabin 5. The seats 6 themselves may be equipped with seat communication devices 7 such as Bluetooth® communication devices, NFC devices or IrMC communications devices which are installed at each one of the plurality of seats 6 and enable a seat occupant to connect his/her mobile device 1 to a communications network of the aircraft that may be controlled by an aircraft server 8. The aircraft server 8 may for example be an In-flight entertainment (IFE) server that is able to detect the presence of a mobile device 1 at one of a plurality of seats 6 in the cabin 5 of the aircraft. Additionally or alternatively, the aircraft server 8 may employ a wireless positioning system 8a that may use wirelessly signalling to determine the location of mobile devices 1 within the aircraft cabin 5.

After the airline server 9 has assigned all seats 6 to passengers (or all passengers being checked in to the flight have been assigned a seat 6), the airline server 9 may determine the start of the boarding procedure in line with the chosen boarding strategy. Any of the mobile devices 1 participating in the boarding time tracking may then be an individual starting point S in time that depends on the position of the assigned seat 6 in the predetermined boarding order of the aircraft. This starting point S may be individual for each of the mobile devices 1 or may be collectively determined for mobile devices 1 in a specific boarding group.

The airline server 9 transmits a timer start notification signal R4 to the mobile device 1 of the passenger at the starting time S. When this happens, the passenger and his/her mobile device 1 are usually located somewhere between the check-in terminal 2 and the gate terminal 3. The timer start notification signal R4 triggers a first time period T1 during which a boarding time counter CD is activated in the airline server 9. The boarding time counter CD tracks the time needed for the passenger to reach his/her assigned seat 6 and may be read out to determine a boarding timespan as a period of time that elapsed between transmittal S of the timer start notification signal and the detection of the presence of the mobile device 1 at the assigned seat 6.

After the time T1 has elapsed, the passenger reaches the gate terminal 3 and sends a gate pass request R5 to the gate terminal 3 which acknowledges to the airline server 9 in a boarding confirmation message R6 that the passenger has entered the gate. This acknowledgement will usually not stop the boarding time counter CD from running as the passenger is expected to be able to influence the boarding time after passing into the gate area. Thus, a second time period T2 during which the passengers travels from the gate terminal 3 into the aircraft 5, for example through a boarding bridge, may commence.

However, in some cases, the passenger cannot influence the travelling time, for example when having to wait for a taxiway transportation vehicle 4. When entering such a taxiway transportation vehicle 4, the mobile device 1 may be recognized by a communications device of the taxiway transportation vehicle 4 with a detection message R7 and this may be signalled to the airline server 9 in a halting message R8. The halting message R8 causes the airline server 9 to temporarily halt the boarding time counter CD (or to start a release timespan T3 as a period of time during which the mobile device 1 is detected in the vicinity of the transportation vehicle 4). This release timespan T3 will not count towards the boarding timespan as the passenger is not expected to be able to influence the timespan T3 significantly. In other words, the release timespan T3 may be subtracted from the time needed by the passenger to reach his/her assigned seat. Such a normalized and individually adapted timespan may be called a passenger accredited boarding timespan.

Once the passenger gets of the transportation vehicle 4, a recommence signal R9 is transmitted by communications device of the taxiway transportation vehicle 4 to the airline server 9 which in turn signals in a message R10 to the mobile device 1 that the passenger accredited boarding time is running again. Then, the passenger moves on during a timespan T4. Once inside the cabin 5 of the aircraft, it will take another timespan T5 for the passenger to stow his/her carry-on baggage and occupy the assigned seat 6. The aircraft server 8 detects the presence of a mobile device 1 at the seat 6, for example by detecting the reception of a communication request R11 of the mobile device 1 at one of the seat communication devices 7. The detection of the presence of the mobile device 1 at the assigned seat 6 is then signalled to the airline server in a timer end notification signal R12, causing the airline server 9 to halt the boarding time counter CD.

The airline server 9 may then compare the determined passenger accredited boarding time with an expected aircraft boarding time, for example a boarding time extracted from simulation values of the chosen boarding strategy or from previously accrued experimental mean boarding time values in similar boarding scenarios. The result of the comparison may be relayed to the mobile device 1 of the passenger in a result signal R13. If the determined passenger accredited aircraft boarding time is faster than the expected aircraft boarding time, for example by a predetermined incentivation threshold, then the result signal R13 may also serve to present the passenger with a choice out of a number of different incentives. For example, the passenger may be awarded with frequent traveller miles, a pre-order of food choices on the next flight and/or discounts on ticket prices for the next flights. The passenger may for example actively choose one or more of the offered rewards using an app installed on the mobile device 1. Alternatively, the incentives may be automatically credited to a passenger account stored in the airline data server 9b.

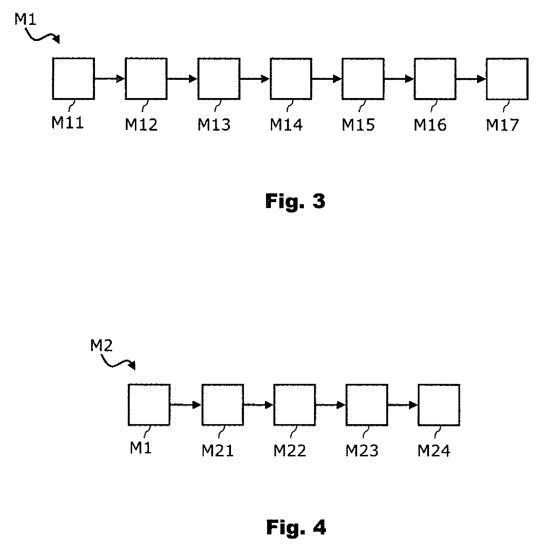

Fig 3 schematically illustrates a method M1 for determining individual passenger aircraft boarding times. The method M1 may for example be performed using the system 10 as exemplarily shown in Fig. 1 and may be performed in conjunction with the message exchange as exemplarily depicted in Fig. 2.

In a first step M11, a boarding pass may be transmitted to the mobile device 1 of a passenger of an aircraft. Then, in a second step M12, a seat 6 in an aircraft is assigned to the mobile device 1 of the passenger. At a point in time that may optionally depend on the position of the assigned seat 6 in a predetermined boarding order of the aircraft, a timer start notification signal may be transmitted to the mobile device 1 of the passenger by an airline server 9. A period of time that elapses between transmittal S of the timer start notification signal and detection of the presence of the mobile device 1 at the assigned seat 6 may be measured by detecting the presence of the mobile device 1 of the passenger at the assigned seat 6 in a step M14 and then determining the boarding timespan as elapsed time in the step M15.

The boarding timespan may be adjusted to account for release timespans during which a passenger is not expected to significantly be able to influence the boarding procedure. For example, in a step M16, a release timespan T3 may be determined as a period of time during which the mobile device 1 is detected in the vicinity of one of a number of predefined objects 4, such as taxiway transportation vehicles 4. In a step M17, the determined release timespan T3 may be subtracted from the boarding timespan in order to determine a passenger accredited boarding timespan.

For detection of the presence of the mobile device 1 at the assigned seat 6, a number of options may be considered: For example, the reception of a connection request of the mobile device 1 at a seat communication device 7 of the assigned seat 6 may be detected, such as a Bluetooth® communication device, an NFC device or an IrMC communications device. Alternatively, it may be possible to detect the position of the mobile device 1 within a cabin 5 of the aircraft via a wireless positioning system 8a.

Fig. 4 schematically illustrates a further method M2 for incentivizing passenger cooperation during boarding of an aircraft. The method M2 may in particular make use of the method M1 for determining individual passenger aircraft boarding times as explained and described in conjunction with Fig. 3.

In a step M21, the determined aircraft boarding time for the individual passenger may be compared with an expected aircraft boarding time, for example an aircraft boarding time that has been calculated from a simulation of a predetermined boarding strategy or measured in previous similar boarding scenarios as typical boarding time value. The result of the comparison of the determined aircraft boarding time with the expected aircraft boarding time may be transmitted in step M22 to the mobile device 1 of the individual passenger. If the determined aircraft boarding time had been faster than the expected aircraft boarding time, for example by a predetermined incentivation threshold, then the passenger is offered a choice of different incentives to the individual passenger on her/his mobile device 1 in a step M23, for example frequent traveller miles, pre-order of food choices on the next flight and/or discounts on ticket prices for the next flights. In any case, the individual passenger may be awarded with an incentive in a step M24, if he/she had been faster than the determined aircraft boarding time by at least a predetermined margin. The passenger may be automatically credited with the incentive or may make a choice by means of an app on his/her mobile device 1.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### LIST OF REFERENCE NUMERALS

- 1: Mobile device
- 1a: Mobile device
- 1b: Mobile device
- 1c: Mobile device
- 1d: Mobile device
- 2: Check-in terminal
- 3: Gate terminal
- 4: Transportation vehicle
- 5: Aircraft cabin
- 6: Aircraft seat
- 7: Seat communication device
- 8: Aircraft server
- 8a: Wireless positioning system
- 9: Airline server
- 9a: Radio communication network
- 9b: Airline data server
- 10: System
- CD: Countdown timer
- M1: Method
- M11: Method step
- M12: Method step
- M13: Method step
- M14: Method step
- M15: Method step
- M16: Method step
- M17: Method step
- M2: Method
- M21: Method step
- M22: Method step
- M23: Method step
- M24: Method step
- P: Participation link
- R1: Message
- R2: Message
- R3: Message
- R4: Message
- R5: Message
- R6: Message
- R7: Message
- R8: Message
- R9: Message
- R10: Message
- R11: Message
- R12: Message
- R13: Message
- T1: Travel action
- T2: Travel action
- T3: Travel action
- T4: Travel action
- T5: Travel action

## Claims

1. Method (M1) for determining individual passenger aircraft boarding times, the method (M1) comprising:
assigning (M12) a seat (6) in an aircraft to a mobile device (1) of a passenger of the aircraft;
transmitting (M13) a timer start notification signal to the mobile device (1) of the passenger;
detecting (M14) the presence of the mobile device (1) of the passenger at the assigned seat (6); and
determining (M15) a boarding timespan (T1, T2, T4, T5) as a period of time that elapsed between transmittal (S) of the timer start notification signal and detection of the presence of the mobile device (1) at the assigned seat (6).

2. Method (M1) according to claim 1, further comprising:
transmitting (M11) a boarding pass to the mobile device (1) of the passenger.

3. Method (M1) according to one of the claims 1 and 2, wherein the timer start notification signal is transmitted to the mobile device (1) at a point in time that depends on the position of the assigned seat (6) in a predetermined boarding order of the aircraft.

4. Method (M1) according to one of the claims 1 to 3, wherein detecting (M14) the presence of the mobile device (1) at the assigned seat (6) comprises detecting the reception of a connection request of the mobile device (1) at a seat communication device (7) of the assigned seat (6).

5. Method (M1) according to one of the claims 1 to 3, wherein detecting (M14) the presence of the mobile device (1) at the assigned seat (6) comprises detecting the position of the mobile device (1) within a cabin (5) of the aircraft via a wireless positioning system (8a).

6. Method (M1) according to claim 4, wherein the seat communication device (7) is one of a Bluetooth® communication device, an NFC device and an IrMC communications device.

7. Method (M1) according to one of the claims 1 to 6, further comprising:
determining (M16) a release timespan (T3) as a period of time during which the mobile device (1) is detected in the vicinity of one of a number of predefined objects (4); and
subtracting (M17) the release timespan (T3) from the boarding timespan (T1, T2, T4, T5) to determine a passenger accredited boarding timespan.

8. System (10) for determining individual passenger aircraft boarding times, comprising:
an aircraft server (8) configured to detect the presence of a mobile device (1) at one of a plurality of seats (6) in the cabin (5) of the aircraft; and
an airline server (9) which is configured to
assign a seat (6) in the aircraft to a mobile device (1) of a passenger of the aircraft,
transmit a timer start notification signal to the mobile device (1) of the passenger, and
determine a boarding timespan (T1, T2, T4, T5) as a period of time that elapsed between transmittal (S) of the timer start notification signal and detection of the presence of the mobile device (1) at the assigned seat (6) by the aircraft server (8).

9. System (10) according to claim 8, further comprising:
a plurality of seat communication devices (7), each respectively installed at one of the plurality of seats (6) in the cabin (5) of the aircraft,
the aircraft server (8) being configured to detect the presence of a mobile device (1) by detecting the reception of a communication request of the mobile device (1) at the seat communication devices (7).

10. System (10) according to claim 9, wherein the seat communication devices (7) are Bluetooth® communication devices, NFC devices or IrMC communications devices.

11. System (10) according to one of the claims 8 to 10, wherein the airline server (9) is further configured to transmit a boarding pass to the mobile device (1) of the passenger.

12. Method (M2) for incentivizing passenger cooperation during boarding of an aircraft (5), the method (M2) comprising:
determining (M1) the aircraft boarding time of an individual passenger with a method according to one of the claims 1 to 7;
comparing (M21) the determined aircraft boarding time for the individual passenger with an expected aircraft boarding time; and
awarding (M24) the individual passenger with an incentive, if the determined aircraft boarding time is faster than the expected aircraft boarding time by a predetermined incentivation threshold.

13. Method (M2) according to claim 12, further comprising:
transmitting (M22) the result of the comparison of the determined aircraft boarding time with the expected aircraft boarding time to a mobile device (1) of the individual passenger.

14. Method (M2) according to claim 13, further comprising:
offering (M23) a choice of different incentives to the individual passenger on her/his mobile device (1), if the determined aircraft boarding time had been faster than the expected aircraft boarding time by the predetermined incentivation threshold.

15. Method (M2) according to claim 13, wherein the choice of different incentives includes one or more of frequent traveller miles, pre-order of food choices on the next flight and discounts on ticket prices for the next flights.
